# EUROPÄISCHE PATENTSCHRIFT

(11) **EP 1 793 905 B1**
(45) Veröffentlichungstag und Bekanntmachung des Hinweises auf die Patenterteilung: **10.01.2018**
(21) Anmeldenummer: 05791824.5
(22) Anmeldetag: 13.09.2005
(51) Int. Cl.: B01D 1/06

(54) **TEILLASTFÄHIGER FALLFILMVERDAMPFER UND VERFAHREN ZUM TEILLASTBETRIEB**
PARTIAL LOAD ENABLED FALLING FILM EVAPORATOR AND METHOD FOR OPERATING A PARTIAL LOAD
EVAPORATEUR A COUCHE DESCENDANTE POUVANT FONCTIONNER EN MODE DE CHARGE PARTIELLE ET PROCEDE D'UTILISATION EN MODE DE CHARGE PARTIELLE

(30) Priorität: 17.09.2004 DE 102004045671
(43) Veröffentlichungstag der Anmeldung: 13.06.2007
(73) Patentinhaber: ThyssenKrupp Industrial Solutions AG, 45143 Essen (DE)
(72) Erfinder: PORSCHA, Peter, 65779 Kelkheim (DE); BENJE, Michael, 64289 Darmstadt (DE); HAFENSCHER, Harald, 65843 Sulzbach (DE)
(74) Vertreter: Brosch, Oliver
(86) Internationale Anmeldenummer: PCT/EP2005/009806
(87) Internationale Veröffentlichungsnummer: WO 2006/029798

(56) Entgegenhaltungen:
- EP-A- 0 100 263
- EP-A- 0 862 935
- DE-A1- 19 928 064
- GB-A- 1 111 569
- SU-A1- 1 084 033
- US-A- 4 094 734

## Beschreibung

Gegenstand der vorliegenden Erfindung ist ein Fallfilmverdampfer, der mindestens aufweist:
- einen äußeren, umhüllenden Mantel,
- eine Anzahl von Rohren, an deren Innenseite ein Flüssigkeitsfilm ablaufen kann,
- oberseitige Einrichtungen zum Verteilen der Flüssigkeit in die einzelnen Rohre,
- unterseitige Einrichtungen zum Sammeln von Restflüssigkeit und Dampf,
- eine Dampfabzugsvorrichtung für rohrinnenseitig erzeugten Dampf,
- eine Flüssigkeitsabzugsvorrichtung für rohrinnenseitig nicht verdampfte Flüssigkeit,
- Begrenzungen, die den Rohrinnenraum und die mit ihm hydraulisch verbundenen Einrichtungen zum Verteilen und Sammeln vom Rohraußenraum abtrennen,
- eine Einrichtung zur Zuführung eines Gas-Dampf-Gemisches in den Rohraußenraum,
- eine Einrichtung zur Ableitung von kondensierter Flüssigkeit aus dem Rohraußenraum, und
- eine Einrichtung zur Ableitung nicht kondensierter Dämpfe und nicht kondensierbarer Gase aus dem Rohraußenraum, wobei
- der Flüssigkeitsverteiler, der die zu verdampfende Flüssigkeit auf die einzelnen Rohrinnenseiten aufteilt, in mindestens 2 Abschnitte aufgeteilt wird, und
- jeder dieser Abschnitte einzeln mit Flüssigkeit beaufschlagt oder nicht beaufschlagt werden kann.

Der Fallfilmverdampfer wird hierzu mit einem geteilten Verteiler ausgestattet, der so ausgebildet ist, dass der Fallfilmverdampfer auch unter Teillast betrieben werden kann. Weiterhin Gegenstand ist ein Verfahren zum Betrieb dieses Fallfilmverdampfers, wobei ihm die Aufgabe zukommt, Wärme, die beim Kondensieren eines Gas-Dampf-Gemisches frei wird, auf eine wenigstens teilweise dabei zu verdampfende Flüssigkeit zu übertragen. Sinnvoll einsetzbar ist ein solchermaßen ausgestatteter und betriebener Fallfilmverdampfer in Systemen der Wärmerückgewinnung, beispielsweise bei der Herstellung von 1,2-Dichlorethan (im folgenden als EDC bezeichnet).

Fallfilmverdampfer sind dafür bekannt, dass mit ihnen eine schonende Erhitzung empfindlicher Flüssigkeiten möglich ist. Dies liegt an den hohen Wärmeübergangskoeffizienten an den Rohrinnenwänden, die dazu führen, dass zwischen der Außenwand, die in der Regel von Heizmedium beheizt wird, und der Flüssigkeit, die als Film an der Rohrinnenwand herabrinnt und verdampft wird, nur eine kleine Temperaturdifferenz erforderlich ist. Dieser Umstand ermöglicht es aber auch, als Heizmedien geringerwertige Wärmequellen zu nutzen, deren Temperaturniveau nur knapp über demjenigen der rohrinnenseitig zu verdampfenden Flüssigkeit liegen muss.

Dies gilt umso mehr, wenn auch auf der Rohraußenseite ein hoher Wärmeübergangskoeffizient wirkt, weil die Heizquelle aus kondensierbarem Dampf besteht. Die erforderliche Temperaturdifferenz zwischen Heizmedium und zu verdampfender Flüssigkeit kann dann bis auf 3 K sinken. Hierbei spielt es keine Rolle, um welche Art Dampf es sich handelt. Außer Wasserdampf sind auch im jeweiligen Prozess anfallende Dämpfe anderer Stoffe geeignet, etwa Brüden aus Destillationen oder dampfförmig abgezogene, chemisch erzeugte Produkte.

Daher werden Fallfilmverdampfer in zunehmendem Maße auch für die Aufgabe der Wärmerückgewinnung in großtechnischen Anlagen attraktiv. Insbesondere können sie als Sumpfaufheizer in Rektifikationskolonnen eingesetzt werden, etwa bei der Herstellung von EDC, wie aus der EP 1 228 022 B1 und der DE 36 04 968 A1 bekannt ist.

Im praktischen Einsatz weisen Fallfilmverdampfer, als deren Heizmedium ein teilweise kondensierbares Gas-Dampf-Gemisch dient, aber leider den Nachteil auf, das sie nur sehr schlecht unter Teillastbedingungen betrieben werden können. Sofern sie als Sumpfaufkocher von Rektifikationskolonnen eingesetzt werden sollen, ist damit auch der Nachteil schlechter Regelbarkeit umfasst, da eine Verringerung der Wärmezufuhr aufgrund eines Regeleingriffs den Fallfilmverdampfer wenigstens zeitweise in den Teillastbetrieb führt. Auch An- und Abfahrvorgänge bereiten erhebliche Schwierigkeiten.

Die ungünstigen Eigenschaften unter Teillast sind auf das Kondensationsverhalten des Heizmediums zurückzuführen. Unter Volllast kann das heizende Gas-Dampf-Gemisch ungehindert durch die geregelte Zuführeinrichtung (im folgenden als Regelventil bezeichnet) in den Rohraußenraum eintreten, das Regelventil ist vollständig offen. Der Regeleingriff für den Teillastbetrieb bewirkt eine Teilschließung des Regelventils, und erzeugt einen Druckverlust in der Strömung durch das Ventil. Der dadurch absinkende Druck im Rohraußenraum bewirkt zunächst eine Partialdruckabsenkung der heizenden Dämpfe, und damit auch der Temperatur, bei der die Kondensation auf der Rohraußenseite stattfindet. Aufgrund der sehr geringen Temperaturdifferenz zwischen Rohraußenseite und Rohrinnenseite sinkt auch die Verdampfungstemperatur auf der Rohrinnenseite, was in der Regel unerwünscht ist, weil hierdurch die Temperaturverhältnisse der Rektifikationskolonne verändert werden.

Der zweite Nachteil ist, dass das Gas aus dem Gas-Dampf-Gemisch nur noch unter Schwierigkeiten aus dem Fallfilmverdampfer entfernt werden kann, wenn es nicht mehr genügend Restdruck aufweist. Je nach Vordruck und Druckverlust durch das Regelventil wird zum Abzug des Gases eine Vakuumpumpe benötigt. Sofern nicht der gesamte Dampf kondensiert ist, muss die Vakuumpumpe die Dampfanteile ebenfalls wegfördern können.

Ein weiteres Problem entsteht dann, wenn das Gas aus dem Gas-Dampf-Gemisch einen explosiven Bereich aufweist. Dies ist besonders dann relevant, wenn eine Totalkondensation des Dampfes eintritt. Beispielsweise tritt bei Verwendung eines Gas-Dampf-Gemisches aus Ethylen, Sauerstoff und EDC mit EDC als weit überwiegender, kondensierbarer Komponente und Sauerstoff und Ethylen als Bildner eines explosiven Gemisches während des Kondensierens ein solches Problem auf. Es ist daher in diesem Fall erforderlich, eine Totalkondensation der EDC-Dämpfe sicher zu verhindern.

Die oben erwähnten Probleme sind dabei nicht nur statischer Natur, sondern hängen auch mit der Geschwindigkeit der Regelungseingriffe ab. Generell sind schnell wirkende Regelungseingriffe deutlich schwieriger stabil zu halten als langsame Regelungseingriffe. Fallfilmverdampfer herkömmlicher Bau- und Betriebsart sind hier besonders empfindlich.

Die Aufgabe der Erfindung ist es daher, die oben genannten Nachteile zu überwinden und einen Fallfilmverdampfer sowie ein Verfahren zu seinem Betrieb mit einem guten Teillastverhalten zur Verfügung zu stellen.

Diese Aufgabe wird durch die Vorrichtung nach Patentanspruch 1 und das Verfahren nach Patentanspruch 4 gelöst. Die Erfindung löst die Aufgabe, indem die Abschnitte unterschiedlich groß ausgeführt werden, so dass jeder der Abschnitte eine unterschiedlich große Anzahl von Rohren mit Flüssigkeit versorgt.

Die Teilung sollte bevorzugt so erfolgen, dass zwischen einem kleineren Abschnitt und seinem nächstgrößten Abschnitt ein Verhältnis von 1 zu 4 bis 2 zu 3, idealerweise 1 zu 2 bezügliche der Anzahl der mit Flüssigkeit zu versorgenden Rohre besteht.

Bei der Verwendung von 2 Abschnitten ergibt sich somit für den kleineren Abschnitt, dass er so ausgelegt wird, dass er 20 bis 40 % der Rohre mit Flüssigkeit beaufschlagt, idealerweise 33 %. Bei der Verwendung von 3 Abschnitten hätte der kleinste Abschnitt zwischen 4,8 und 21 %, idealerweise 14 % der Rohre zu versorgen, der mittlere zwischen 19 und 32 %, idealerweise 28 %, und der größte zwischen 47 und 76 %, idealerweise 57 %.

Die Anordnung der Abschnitte sowie deren Geometrie spielt keine Rolle. Die Abschnitte können beispielsweise aus konzentrischen Kreisen, kuchenförmigen Sektoren oder aus Kreisabschnitten bestehen, auch jede andere geometrische Anordnung ist möglich. Aufgrund der geringen Temperaturunterschiede zwischen der zu verdampfenden Flüssigkeit und dem dampfförmigen Heizmedium sind keine kritischen Wärmespannungen, wie sie sonst bei Wärmetauschern unter sogenannter Schräglast zu mechanischen Problemen führen können, zu befürchten.

Das Verfahren zum Betrieb besteht darin, dass die Flüssigkeitszufuhr der einzelnen Abschnitte des Verteilersystems je nach gewünschtem Teillastfall einzeln unterbrochen wird. Je nach Flüssigkeitsinhalt der Verteilerabschnitte ist daher eine Schnellregelung im Minutenabstand über einen sehr weiten Betriebsbereich möglich. Dadurch, dass nur noch viel weniger Rohre innen mit Flüssigkeit beaufschlagt werden, wird die effektive Wärmetauscheroberfläche stark reduziert. Eine Feineinstellung kann über die Flüssigkeitsmenge, die die noch mit Flüssigkeit versorgten Verteilerabschnitte bekommen, erfolgen.

Es ist daher nicht mehr erforderlich, das Regelventil des Gas-Dampf-Gemisches für die Regelung der zu übertragenden Wärmemenge des Fallfilmverdampfers einzusetzen. Das Regelventil kann daher die neue Aufgabe übernehmen, über die Druckverlusteinstellung an der Feineinstellung der Sumpfaufkocher-Temperatur mitzuwirken, selbstverständlich in den oben beschriebenen Grenzen.

Sofern eine derartige Regelung der Sumpfaufkocher-Temperatur nicht benötigt wird, kann das übliche Regelventil auch durch ein einfaches, druckverlustarmes Absperrventil ersetzt werden, was ein weiterer Vorteil der Erfindung ist.

Da die gesamte Anordnung in diesem Fall äußerst druckverlustarm ausgeführt werden kann, ergibt sich auch die Möglichkeit, das abzuziehende, nach der Kondensation restliche Gas-Dampf-Gemisch mit geringem Aufwand auf den Ausgangsdruck zurückzuverdichten. Dadurch wird auch der Einsatz von Heizquellen möglich, bei denen nur ein Teilstrom benötigt und abgezweigt wird, und denen man das restliche Gas-Dampf-Gemisch wieder zumischen kann, was ein weiterer Vorteil der Erfindung ist.

In einer vorteilhaften Ausgestaltung der erfindungsgemäßen Vorrichtung besteht die Abzugsvorrichtung für den rohrinnenseitig erzeugten Dampf und nicht kondensierbare Gase aus einem zentralen Rohr, welches aus einer nach unten gerichtete Eintrittsöffnung und ein sich anschließendes senkrechtes Teilstück gebildet ist. Idealerweise ist dabei der Durchmesser des Rohres gleich oder größer der Summe der inneren freien Strömungsquerschnitte aller Verdampferrohre, so dass weitestgehend ein Mitreißen von Fluidteilchen unterbunden wird.

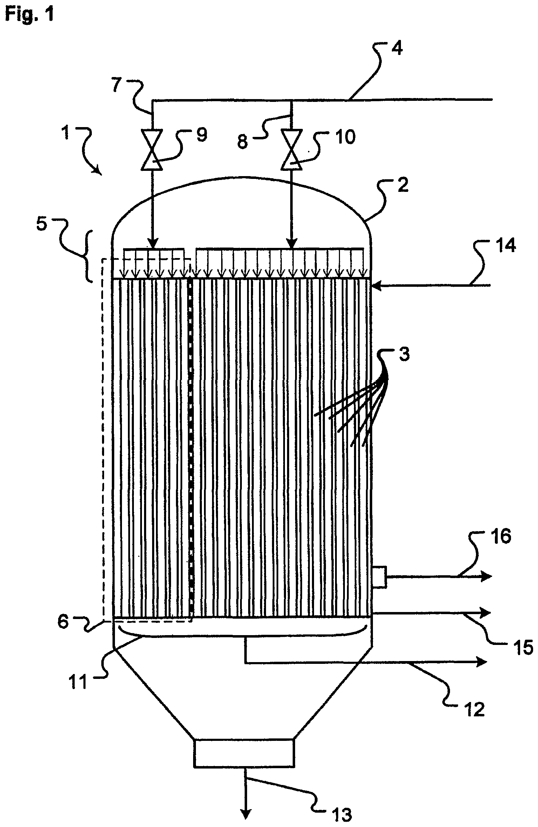

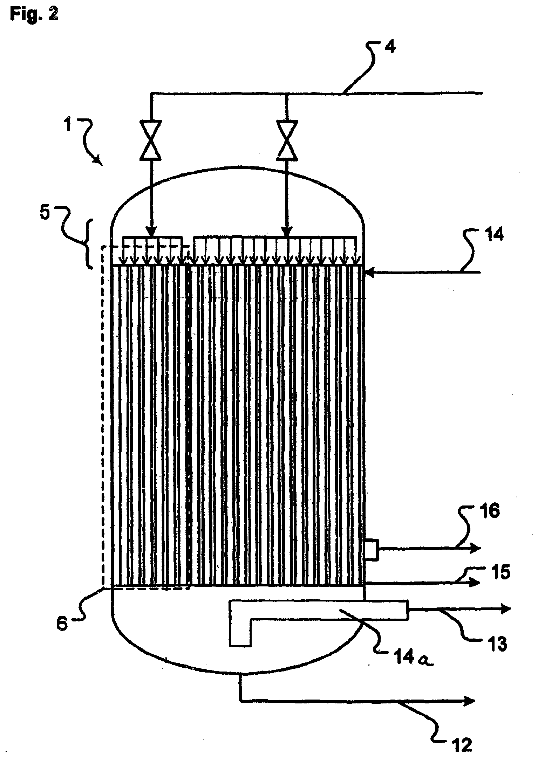

Die Erfindung wird anhand der in Fig. 1 und Fig. 2 dargestellten Beispielen näher erläutert. Fig. 1 zeigt einen Fallfilmverdampfer 1, welcher einen äußeren, umhüllenden Mantel 2 und eine Vielzahl von Rohren 3 aufweist, welche beidseitig in nicht näher bezeichneten Rohrböden befestigt sind. Die in den Rohren 3 geführte Flüssigkeit wird über Leitung 4 der oberseitigen Verteilereinrichtung 5 zugeleitet und durch diese auf zwei Rohrsegmente verteilt, wobei das kleinere Rohrsegment 6 durch eine gestrichelte Linie eingerahmt dargestellt ist. Die Leitung 4 wird analog der Segmentanzahl der Verteilereinrichtung 5 in zwei Leitungen 7 und 8 aufgeteilt, wobei in jeder dieser Leitungen 7 und 8 ein Ventil 9 beziehungsweise 10 angeordnet ist, so dass die Segmente der Verteilereinrichtung 5 fluiddynamisch voneinander getrennt werden können.

Unterhalb der Rohre 3 ist eine Sammeleinrichtung 11 angeordnet, welche die Restflüssigkeit aus den Rohren 3 aufnimmt und über die Leitung 12 aus dem Fallfilmverdampfer 1 leitet. Der Dampf und die Gase, welche die Rohre 3 durchströmt haben oder dort gebildet wurden, werden über die Leitung 13 aus dem Fallfilmverdampfer 1 geführt.

Über die Leitung 14 erfolgt die Zuführung eines Gas-Dampf-Gemisches in den Rohraußenraum. Dort gebildetes Kondensat wird über Leitung 15 abgeleitet und nicht kondensierte Dämpfe beziehungsweise nicht kondensierbare Gase verlassen über Leitung 16 den Rohraußenraum und den Fallfilmverdampfer 1.

In Fig. 2 ist ein Ausführungsbeispiel gezeigt, in welchem die Flüssigkeit aus der Rohrinnenseite im Boden des Fallfilmverdampfers 1 gesammelt und über die Leitung 12 abgeleitet wird. Dampf und nicht kondensierbare Gase aus der Rohrinnenseite werden über ein zentrales Rohr 14 abgeleitet, welches eine nach unten gerichtete Eintrittsöffnung, ein sich anschließendes senkrechtes Teilstück und einen großen Durchmesser aufweist, so dass das Mitreißen von Flüssigkeit im Gasstrom unterbunden wird. Über das horizontale Teilstück des zentralen Rohres 14 und die Leitung 13 werden der Dampf und die Gase aus dem Fallfilmverdampfer heraus geleitet.

In einer einfachen und nicht gesondert dargestellten Varianten kann die aus den Rohren 3 kommende Flüssigkeit gemeinsam mit dem Dampf im unteren Teil des Fallfilmverdampfers 1 gesammelt und in einer gemeinsamen Leitung 12 abgezogen werden.

## Patentansprüche

1. Fallfilmverdampfer (1), aufweisend
• einen äußeren, umhüllenden Mantel (2).
• eine Anzahl von Rohren (3), an deren Innenseite ein Flüssigkeitsfilm ablaufen kann,
• oberseitige Einrichtungen (5) zum Verteilen der Flüssigkeit in die einzelnen Rohre,
• unterseitige Einrichtungen zum Sammeln von Restflüssigkeit und Dampf,
• eine Dampfabzugsvorrichtung für rohrinnenseitig erzeugten Dampf,
• eine Flüssigkeitsabzugsvorrichtung für rohrinnenseitig nicht verdampfte Flüssigkeit,
• Begrenzungen, die den Rohrinnenraum und die mit ihm hydraulisch verbundenen Einrichtungen zum Verteilen und Sammeln vom Rohraußenraum abtrennen,
• eine Einrichtung (14) zur Zuführung eines Gas-Dampf-Gemisches in den Rohraußenraum,
• eine Einrichtung zur Ableitung von kondensierter Flüssigkeit aus dem Rohraußenraum, und
• eine Einrichtung zur Ableitung nicht kondensierter Dämpfe und nicht kondensierbarer Gase aus dem Rohraußenraum, wobei
• der Flüssigkeitsverteiler (5), der die zu verdampfende Flüssigkeit auf die einzelnen Rohrinnenseiten aufteilt, in mindestens 2 Abschnitte aufgeteilt wird, und
• jeder dieser Abschnitte einzeln mit Flüssigkeit beaufschlagt oder nicht beaufschlagt werden kann,
**dadurch gekennzeichnet, dass** die Abschnitte unterschiedlich groß ausgeführt werden, so dass jeder der Abschnitte eine unterschiedlich große Anzahl von Rohren (3) mit Flüssigkeit versorgt.

2. Vorrichtung nach Anspruch 1, **dadurch gekennzeichnet, dass** zwischen einem kleineren Abschnitt und seinem nächstgrößeren Abschnitt ein Verhältnis von 1 zu 4 bis 2 zu 3, idealerweise 1 zu 2, bezogen auf die Anzahl der mit Flüssigkeit zu versorgenden Rohre (3)besteht.

3. Vorrichtung nach Anspruche 1 oder 2, **dadurch gekennzeichnet, dass** die Abzugsvorrichtung für rohrinnenseitig erzeugten Dampf und nicht kondensierbare Gase aus einem Rohr (14a) besteht, welches eine nach unten gerichtete Eintrittsöffnung und ein sich anschließendes senkrechtes Teilstück umfaßt.

4. Vorrichtung nach Anspruch 3, **dadurch gekennzeichnet, dass** der Durchmesser des Rohres (14a) gleich oder größer der Summe der inneren freien Strömungsquerschnitte aller Verdampferrohre ist.

5. Verfahren zum Betreiben einer Vorrichtung nach einem der Ansprüche 1 bis 5 4, **dadurch gekennzeichnet, dass** die Flüssigkeitszufuhr der einzelnen Abschnitte des Verteilersystems je nach gewünschtem Teillastfall einzeln unterbrochen wird, wobei die Abschnitte unterschiedlich groß ausgeführt werden, so dass jeder der Abschnitte eine unterschiedlich große Anzahl von Rohren (3) mit Flüssigkeit versorgt.

6. Verwendung eines Verfahrens nach Anspruch 5 für die Herstellung von EDC.

## Claims

1. Falling film evaporator (1), having
• an outer, enclosing jacket (2),
• a number of tubes (3), on the inner side of which a liquid film is able to run down,
• top-side devices (5) for distributing the liquid into the individual tubes,
• bottom-side devices for collecting residual liquid and vapour,
• a vapour removal device for vapour produced on the inner side of tubes,
• a liquid removal device for liquid not evaporated on the inner side of tubes,
• boundaries, which separate off from the tube exterior space the tube interior space and the devices which are hydraulically connected to the latter and which serve for distributing and collecting,
• a device (14) for feeding a gas/vapour mixture into the tube exterior space,
• a device for discharging condensed liquid from the tube exterior space, and
• a device for discharging non-condensed vapours and non-condensable gases from the tube exterior space, wherein
• the liquid distributor (5), which divides the liquid to be evaporated between the individual tube inner sides, is divided into at least 2 sections, and
• each of said sections can be or cannot be charged individually with liquid,
**characterized in that**
the sections are designed to be of different sizes, with the result that each of the sections supplies a different number of tubes (3) with liquid.

2. Device according to Claim 1, **characterized in that,** based on the number of the tubes (3) to be supplied with liquid, a ratio of 1 to 4 up to 2 to 3, ideally 1 to 2, exists between a smaller section and its next larger section.

3. Device according to Claim 1 or 2, **characterized in that** the removal device for vapour produced on the inner side of tubes and non-condensable gases consists of a tube (14a) which comprises an inlet opening directed downwards and an adjoining perpendicular part.

4. Device according to Claim 3, **characterized in that** the diameter of the tube (14a) is equal to or greater than the sum of the inner, free cross sections of all the evaporator tubes.

5. Method for operating a device according to one of Claims 1 to 4, **characterized in that** the liquid feeding of the individual sections of the distributor system is interrupted individually depending on the desired part-load case, wherein the sections are designed to be of different sizes, with the result that each of the sections supplies a different number of tubes (3) with liquid.

6. Use of a method according to Claim 5 for the production of EDC.

## Revendications

1. Évaporateur à film tombant (1), comportant
• une gaine extérieure enveloppante (2)
• une pluralité de tubes (3) sur la face intérieure desquels un film liquide peut s'écouler,
• des dispositifs (5) sur la face supérieure pour distribuer le fluide dans les tubes individuels,
• des dispositifs sur la face inférieure pour collecter le fluide résiduel et la vapeur,
• un dispositif d'aspiration de la vapeur produite à l'intérieur des tubes,
• un dispositif d'aspiration du fluide non évaporé à l'intérieur des tubes,
• des délimitations, séparant l'espace intérieur des tubes et les dispositifs de collecte et de distribution y étant raccordés hydrauliquement de l'espace extérieur des tubes,
• un dispositif (14) pour acheminer un mélange gaz-vapeur dans l'espace extérieur des tubes,
• un dispositif pour évacuer le fluide condensé hors de l'espace extérieur des tubes,
• un dispositif pour évacuer la vapeur non condensée et les gaz non condensables hors de l'espace extérieur des tubes, dans lequel
• le distributeur de fluide (5), qui répartit le fluide à évaporer vers les faces intérieures des tubes individuels, est divisé en au moins 2 sections, et
• chacune de ces sections peut se voir appliquer ou non le fluide de manière individuelle,
**caractérisé en ce que** les sections sont réalisées dans des tailles différentes, de sorte que chacune des sections alimente en fluide un nombre différent de tubes (3).

2. Dispositif selon la revendication 1, **caractérisé en ce que** le nombre de tubes (3) à alimenter en fluide dans une section de petite taille et la section de taille immédiatement supérieure soit dans un rapport compris entre 1 à 4 et 2 à 3, idéalement 1 à 2.

3. Dispositif selon la revendication 1 ou 2, **caractérisé en ce que** le dispositif d'aspiration pour la vapeur produite à l'intérieur des tubes et pour les gaz non condensés est constitué d'un tube (14a), lequel comprend une ouverture d'entrée orientée vers le bas suivie d'un tronçon perpendiculaire.

4. Dispositif selon la revendication 3, **caractérisé en ce que** le diamètre du tube (14a) est égal ou supérieur à la somme des sections transversales d'écoulement intérieures libres de tous les tubes évaporateurs.

5. Procédé pour l'exploitation d'un dispositif selon une des revendications 1 à 4, **caractérisé en ce que** l'alimentation en fluide des sections individuelles du système distributeur est interrompue individuellement selon la charge partielle souhaitée, où les sections sont réalisées dans des tailles différentes, de sorte que chacune des sections alimente en fluide un nombre différent de tubes (3).

6. Application d'un procédé selon la revendication 5 pour la synthèse du 1,2-dichloroéthane (DCE).
